(19) **Europäisches Patentamt**
**European Patent Office**
**Office européen des brevets**

(11) Veröffentlichungsnummer: **0 328 761 B1**

(12) # EUROPÄISCHE PATENTSCHRIFT

(45) Veröffentlichungstag der Patentschrift:
16.10.91 Patentblatt 91/42

(51) Int. Cl.⁵: **B62D 1/26**

(21) Anmeldenummer: 88120578.5

(22) Anmeldetag: 09.12.88

(54) **Spurführbarer Omnibus.**

(30) Priorität: 13.02.88 DE 3804585

(43) Veröffentlichungstag der Anmeldung:
23.08.89 Patentblatt 89/34

(45) Bekanntmachung des Hinweises auf die
Patenterteilung:
16.10.91 Patentblatt 91/42

(84) Benannte Vertragsstaaten:
ES FR GB IT NL

(56) Entgegenhaltungen:
EP-A- 0 007 788

(56) Entgegenhaltungen:
BE-A- 686 979
DE-C- 3 103 488
GB-A- 1 058 847
GB-A- 1 336 737

(73) Patentinhaber: DAIMLER-BENZ
AKTIENGESELLSCHAFT
Mercedesstrasse 136
W-7000 Stuttgart 60 (DE)

(72) Erfinder: Wulf, Helmut
Ernst-Kirchner-Strasse 35/3
W-7302 Ostfildern 2 (DE)
Erfinder: Sawatzky, Siegbert
Schulstrasse 18
W-7314 Wernau (DE)

## Beschreibung

Die Erfindung betrifft einen spurführen Omnibus nach dem Oberbegriff von Anspruch 1, wie er beispielsweise aus der DE-PS 3103488 als bekannt hervorgeht.

Durch die Sollbruchstelle in der Halterung der Querführungsrolle sollen bei unbeabsichtigter Kollision der Querführungsrolle mit Fahrbahnhindernissen Folgeschäden vom Gestänge der lenkbaren Fahrzeugachse ferngehalten werden. Derartige Kollisionen kommen normalerweise außerhalb der spurgebenden Fahrbahn, also bei handgelenktem Fahrbetrieb, insbesondere während des Rangierens oder bei Ausweichmanövern vor. Ein Anriß oder ein vollständiger Bruch der Sollbruchstelle wird dem Fahrer in seinem Wahrnehmungsbereich optisch und/oder akustisch signalisiert. Der Fahrer muß anhalten und einen Werkstattwagen herbeirufen, der die abgebrochene Querführungsrolle gegen eine einwandfrei gehaltene Querführungsrolle austauscht, was relativ rasch von statten geht.

Es ist nicht auszuschließen, daß ein Bruch der Sollbruchstelle auch im spurgeführten Fahrbetrieb, also innerhalb der spurgebenden Fahrbahn vorkommen kann. Nachdem der Fahrer aufgrund der selbsttätigen Spurführung des Fahrzeuges das Lenkrad des Omnibusses nicht in der Hand behält und auch sonst ohne weiteres seine Aufmerksamkeit anderen Dingen als der Fahrzeuglenkung zuwenden kann, besteht die Gefahr, daß im Falle eines Bruchs der Sollbruchstelle das Fahrzeug vorübergehend ungeführt fährt. Eine starke Beanspruchung der Sollburchstelle der Querführungsrolle kann zum einen beim Eingleisen des Fahrzeuges zu Beginn der Spurführungsstrecke oder durch ein innerhalb der Fahrbahn befindliches seitliches Fahrbahnhindernis vorkommen, welches von der Querführungsrolle überrollt wird. Nachdem die Querführungsrolle in Seitenrichtung starr gehaltert ist, muß ein solches Hindernis auf dem Querführungssteg mehr oder weniger zwangsläufig zu einem Bruch der Querführungsrolle führen.

Aufgabe der Erfindung ist es, sicherzustellen, daß trotz eines Abbrechens der Querführungsrolle innerhalb des spurgeführten Betriebes und bei abgelenkter Aufmerksamkeit des Fahrzeuglenkers das Fahrzeug dennoch innerhalb der spurgebenden Querführungsstege gehalten wird, die an sich von den Fahrzeugrädern überrollt werden könnten.

Diese Aufgabe wird erfindungsgemäß durch die kennzeichnenden Merkmale von Anspruch 1 gelöst. dank der am Haltearm angebrachten in Seitenrichtung zurückversetzten und relativ weit unten angebrachten Notlauffläche kann trotz einer abgebrochenen Querführungsrolle der Haltearm zumindest soweit auf Spur gehalten werden, daß der Reifen des Fahrzeugrades mit seiner vorauslaufenden Umfangspartie nicht den Querführungssteg berühren kann, so daß die Gefahr eines "Aufkletterns" des Fahrzeugrades auf den Querführungssteg ausgeschaltet ist.

Zweckmäßige Ausgestaltungen der Erfindung können den Unteransprüchen entnommen werden. Im übrigen ist die Erfindung anhand zweier in den Zeichnungen dargestellter Ausführungsbeispiele nachfolgend noch erläutert ; dabei zeigen :

Figur 1       eine Grundrißdarstellung eines spurführbaren Omnibusses innerhalb einer spurgebenden Fahrbahn,

Figur 2 bis 4       eine vergrößerte Einzeldarstellung der Halterung der vorderen rechten Querführungsrolle einschließlich der Notlauffläche von oben (Figur 2), von der Seite (Figur 3) und von vorne (Figur 4) und

Figur 5       ein modifiziertes Ausführungsbeispiel mit einer Gleitkufe als Notlauffläche in einer ähnlichen Darstellung wie Figur 2.

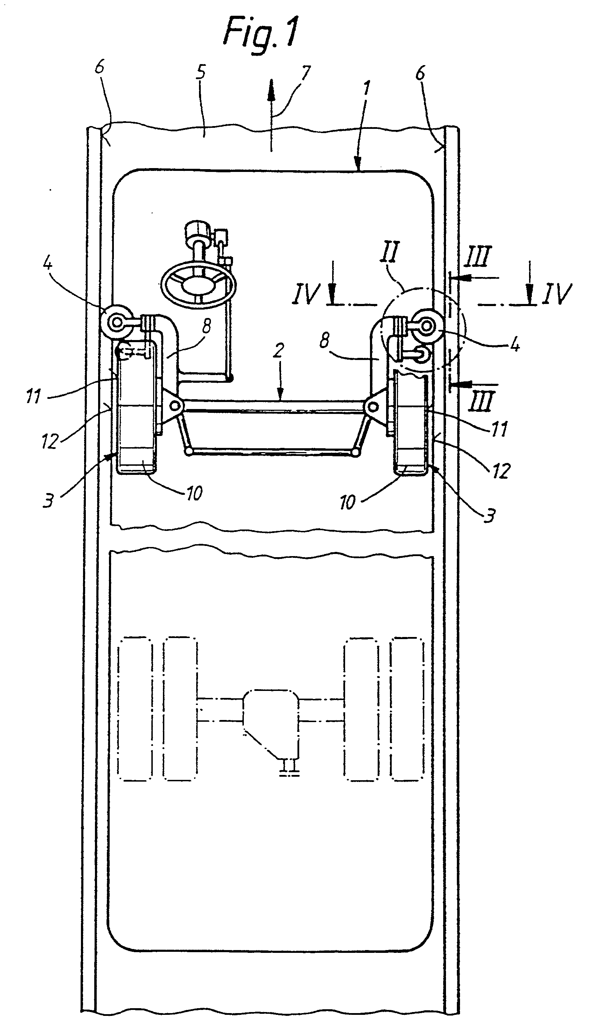

Die Grundrißdarstellung nach Figur 1 zeigt einen spurführbaren Omnibus 1 innerhalb einer spurgebenden Fahrbahn 5, der beiderseits spurbestimmende Querführungsstege 6 aufweist. Der Omnibus kann wahlweise auf normalen Straßen frei von Hand gelenkt werden oder — wie gesagt — selbsttätig auf besonderen Trassen spurgeführt werden. Zu diesem Zweck ist omnibusseitig jedem einschlagbarem Fahrzeugrad 3 der lenkbaren Fahrzeugachse 2 bodennah jeweils eine horizontal liegende Querführungsrolle 4 zugeordnet. Zur Halterung der Querführungsrollen 4 weist jedes Fahrzeugrad 3 einen Haltearm 8 auf, der an dem schwenkbaren Teil der lenkbaren Fahrzeugachse 2 befestigt ist und die Einschlagbewegungen des Fahrzeugrades 3 mitmacht. Dieser Haltearm 8 umgreift das Fahrzeugrad 3 von der Innenseite her nach vorne (Fahrtrichtungspfeil 7) und ist in seinem vorderen Teil zur Fahrzeugaußenseite hin abgekröpft. Er trägt dort einen annähernd parallel zur Fahrzeugaußenseite liegenden Befestigungsflansch 9, an welchem ein noch näher zu behandelndes Wechselteil 13 angeflanscht ist, welches seinerseits über einen Lagerzapfen 16 die Querführungsrolle 4 haltert. Das Wechselteil 13 enthält einen im wesentlichen zylindrischen Hals 18, der am Außenende in eine Klemmhülse 17 übergeht, in die festhaftend aber austauschbar der Lagerzapfen 16 für die Querführungsrolle 4 eingeklemmt ist. Auf der dem Haltearm 8 zugekehrten Seite ist an dem Hals 18 ein Flansch 15 angeformt, der mit dem Befestigungsflansch 9 des Haltearmes 8 korrespondiert. Durch vertikale Einschnitte in den Hals 18 des Wechselteiles 13 ist eine definierte Sollbruchstelle 14 in der Halterung der Querführungsrolle 4 angebracht. Bei Bruch oder Anriß der Sollbruchstelle kann das Wechselteil 13 mit einer daran vormontierten Querführungsrolle leicht ausgetauscht werden. Die Querführungsrolle 4 ist zwar bodennah angeordnet, sie hat jedoch trotzdem einen gewissen lichten Vertikalabstand — Freiraum F — gegenüber der Fahrbahnoberfläche 5, der so hoch bemessen ist, daß die Querführungsrollen 4 normalerweise nicht in Gefahr stehen, bei handgelenktem Betrieb mit üblichen Straßenbordsteinen in Kollision zu gelangen. Der Freiraum F und die erforderliche Breite der Querführungsrolle 4 bestimmt im wesentlichen die vertikale Höhe der seitlichen Querführungsstege 6 ; und zwar sind diese geringfügig höher als die Summe der beiden eben genannten Maße. Nachdem der Haltearm 8 und die Querführungsrolle 4 zu den ungefederten Teilen der Fahrzeugachse 2 gehören, vollführen sie — abgesehen von einer gewissen Reifenabplattung — keine Einfederungsbewegungen, so daß der Überstand des Querführungssteges oberhalb der Oberkante der Querführungsrolle 4 relativ klein sein kann.

Selbst Fahrbahnhindernisse in der Größenordnung der Querführungsrolle 4 können dann immer noch gefahrlos überrollt werden, ohne daß die Querführungsrolle 4 außer Kontakt mit dem Querführungssteg 6 zu gelangen droht. Größere Fahrbahnhindernisse werden jedoch ohne weiteres vom Fahrzeuglenker rechtzeitig bemerkt, so daß er notfalls anhalten und das Fahrbahnhindernis wegräumen kann.

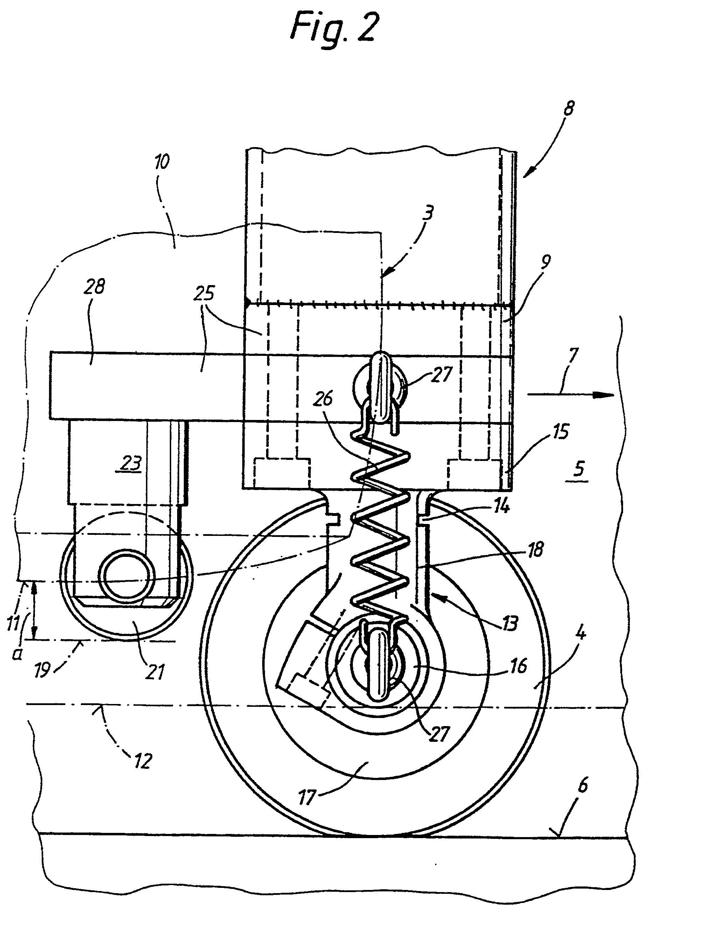

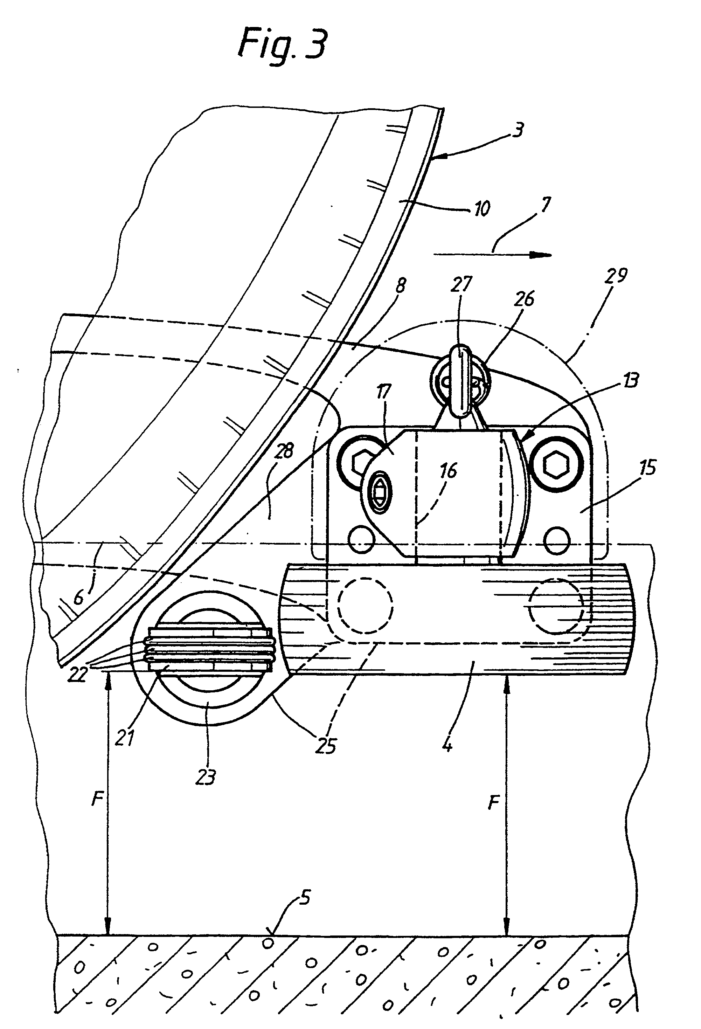

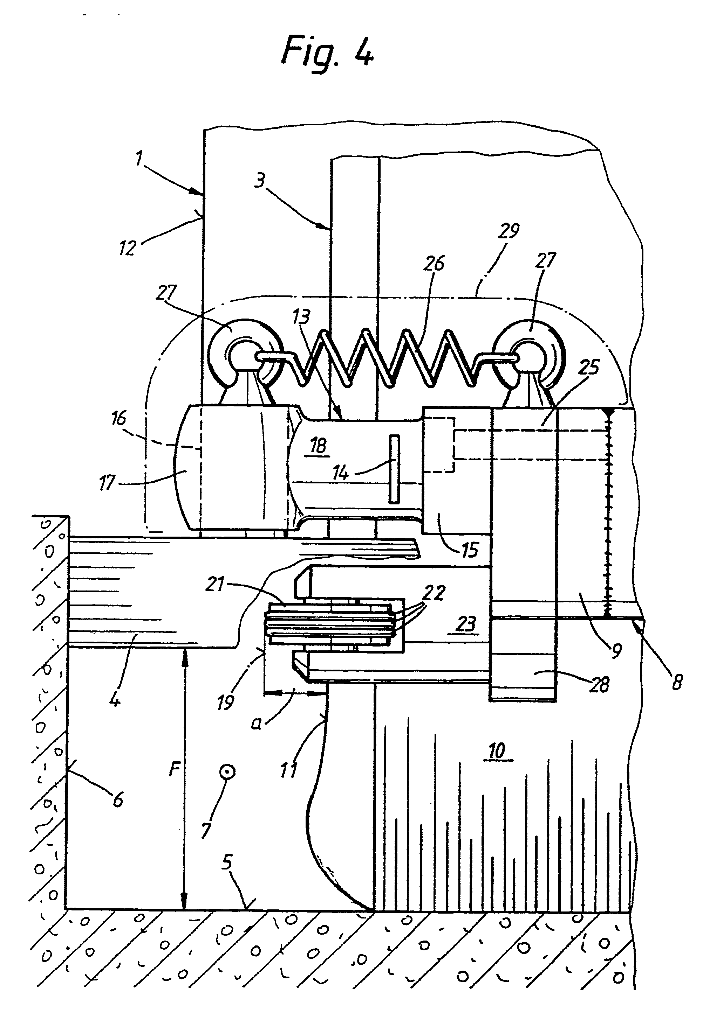

Mit Rücksicht auf die Einhaltung des Freiraumes F unterhalb der Querführungsrolle 4 und mit Rücksicht auf einen möglichst niedrigen Querführungssteg 6 wird die Querführungsrolle 4 vom Haltearm 8 und insbesondere von dem Wechselteil 13 von oben her übergriffen. Wenn das Wechselteil 13 an der Sollbruchstelle 14 abbrechen sollte und die Querführungsrolle 4 nach oben sich entfernen sollte, so könnte die gegenüber der außenliegenden Seitenflanke 11 des Radreifens 3 nach innen zurück versetzt liegende Bruchfläche des Wechselteils 13 ohne weiteres über die Oberkante des Querführungssteges 6 hinwegschwenken. Damit bestünde im Falle eines Rollenbruchs die Gefahr, daß der Radreifen 3 mit der vorauslaufenden Umfangspartie innenseitig an dem entsprechenden Querführungssteg 6 anschnäbelt und "aufklettern" könnte, so daß die Gefahr einer "Entgleisung" des Omnibusses aus der spurgebenden Fahrbahn bestünde. Um dies jedoch zu verhindern, ist erfindungsgemäß am Haltearm 8 eine Notlauffläche 19 angebracht, die zwar gegenüber der außenliegenden Umfangspartie der Querführungsrolle 4 in Seitenrichtung zurückversetzt ist, die aber die außenliegende Seitenflanke 11 des Radreifens 10 seitlich überragt — Maß a —. Die Notlauffläche 19 ist bei dem in den Figuren 1 bis 4 dargestellten Ausführungsbeispiel durch eine Notlaufrolle 21 gebildet. Sie ist an einer solchen Stelle des Haltearmes 8 gehalten, die — von der Sollbruchstelle 14 aus gesehen — näher zum Fahrzeugrad 3 hin liegt. Darüber hinaus ist die Notlauffläche zur Radaußenseite hin frei exponiert und liegt etwa höhengleich wie die untere Partie der Querführungsrolle 4. Sie ist platzsparend und geschützt in dem Zwickel zwischen Querführungsrolle 4 und Fahrzeugrad 3, also in Fahrtrichtung 7 hinter der Querführungsrolle 4 angebracht. Zwar steht die Notlauffläche 19 — im Gegensatz zur Querführungsrolle 4 — nicht gegenüber der seitlichen Außenkontur 12 des Fahrzeuges vor, sondern ist gegenüber dieser Seitenbegrenzungslinie zurückversetzt. Jedoch überragt die Notlauffläche 19 — wie gesagt — die Seitenflanke 11 des Radreifens 10. Durch diese gegenüber der Sollbruchstelle 14 in Seitenrichtung exponierte, jedoch gegenüber der Querführungsrolle 4 in Seitenrichtung zurückversetzte Anordnung der Notlauffläche ist diese gegen unbeabsichtigte Kollisionen geschützt. Außerdem kann sie bei Bruch der Querführungsrolle innerhalb der spurgebenden Fahrbahn vorübergehend und provisorisch eine — wenn auch spielbehaftete — Spurführung des Fahrzeuges übernehmen und ein "Entgleisen" aus der Fahrspur sicher verhindern. Ursächlich hierfür ist, daß die Notlauffläche gegenüber der außenliegenden Seitenflanke 11 des Radreifens 10 übersteht und ein Anscheuern der vorauslaufenden Umfangspartie des Radreifens am Querführungssteg 6 verhindert. Eine provisorische Spurführung des Omnibusses durch die Notlauffläche 19 ist — wie gesagt — nur vorübergehend erforderlich, und zwar so lange, bis nach einem Abbrechen der Querführungsrolle 6 der Fahrer entweder das Fahrzeug zum Stillstand gebracht oder selber das Handlenkrad übernommen hat. Er kann nämlich mittels Handlenkung und einseitiger Verspannung der Lenkung in Richtung auf die gegenüberliegende, also noch intakte Querführungsrolle das Fahrzeug mittels einseitiger Spurführung sicher, d. h. spurgenau selbst bei hoher Fahrgeschwindigkeit durch die spurgebende Fahrbahn hindurchführen. Er kann dann bis zur nächsten Ausfahrstelle fahren und dort einen Reparaturwagen herbeirufen und den Reparaturfall abwarten.

Um ein unkontrolliertes Wegfliegen der abgebrochenen Querführungsrolle zu verhindern, ist im Innern des Halses 18 ein energieverzehrendes Fangmittel angebracht, welches die kinetische Energie der weggeschleuderten Querführungsrolle bei kurzer Flugstrecke aufzehrt und die Querführungsrolle in der Nähe der Bruchstelle des fahrenden Fahrzeuges festhält. Damit außerdem im Falle eines Abbrechens der Querführungsrolle diese nach oben aus der Fahrspur herausgehoben wird, ist oberhalb der Sollbruchstelle eine vorgespannte Aufrichtfeder 26 angebracht, die die Sollbruchstelle 14 überspannt und dies- und jenseits von ihr befestigt ist. Beim darbestellten Ausführungsbeispiel ist die Aufrichtfeder 26 als Schraubenzugfeder ausgebildet, die mit ihren endseitig angebrachten Einhängeösen jeweils in eine Ringschraube 27 eingehängt ist. Die eine der Ringschrauben ist in die Stirnseite des Lagerzapfens 16 eingeschraubt; die andere Ringschraube 27 ist in die Umfangsseite einer weiter unten noch näher zu erläuternden Zwischenplatte 25 ein geschraubt. Die Aufrichtfeder 26 unterstützt zwar auch die Wirkung des energieverzehrenden Fangmittels, wenngleich sie diesen Zweck alleine nicht übernehmen könnte.

Bei dem in den Figuren 1 bis 4 gezeigten Ausführungsbeispiel ist — wie gesagt — die Notlauffläche 19 durch eine Notlaufrolle 21 gebildet, die im einfachsten Fall als runde Metallscheibe ausgebildet sein kann. Mit Rücksicht auf eine gute Gleiteigenschaft und eine Korrosionsbeständigkeit empfehlen sich für diesen Anwendungsfall als Werkstoffe Aluminium, Bronze oder korrosionsbeständiger Stahl. Um ein Springen der Notlauffläche auf der mit Stößen und gewissen Unebenheiten behafteten Seitenfläche des Querführungssteges 6 zu vermeiden, ist die Notlaufrolle 21 in vorteilhafter Weise mit einem schwingungsdämpfenden Reifen versehen, der beim dargestellten Ausführungsbeispiel in Form von drei unmittelbar nebeneinander liegenden Rundschnurringen 22 aus Gummi gebildet ist die in eine entsprechende Aufnahmerille eingeklebt sind. Andere denkbare Werkstoffe für einen schwingungsdämpfenden Reifen an der Notlaufrolle 21 wären Kunststoff oder eine Holzbandage aus einem gewickelten und geklebten Span.

Zur Halterung der Notlaufrolle 21 in der richtigen Höhen und Breitenlage im Bereich des nicht abbrechenden Restes des Haltearmes 8 ist beim dargestellten Ausführungsbeispiel eine Zwischenplatte 25 vorgesehen, die gemeinsam mit dem Flansch 15 des Wechselteiles 13 an den Befestigungsflansch 9 des Haltearmes 8 zwischengeflanscht wird. Die Zwischenplatte 25 enthält einen innerhalb der Plattenebene verbleibenden, schräg nach unten sich erstreckenden Stiel 28, an den quer von der Zwischenplatte abragend ein Bolzen 23 befestigt ist. Dieser Bolzen 23 ist aufgrund eines im Bereich seines freien Endes angebrachten horizontal liegenden Schlitzes gabelförmig ausgebildet und nimmt darin die Notlaufrolle 21 drehbar auf.

Um die im Spritzbereich des Fahrzeugrades 3 liegende Rollenhalterung vor allzu großer Verschmutzung zu schützen und um angeworfene Verschmutzung auch leichter abspritzen zu können, wird die Rollenhalterung mit einer formangepaßten Abdeckkappe 29 aus Gummi überdeckt, die die Rollenhalterung teilweise elastisch umgreift und aufgeklipst werden kann. Verschmutzungen laufen an ihr leichter ab; sie kann auch leicht abgespritzt werden, so daß die Rollenhalterung nicht als unschöner Schmutzfänger wirkt. Außerdem sind die teilweise empfindlichen Lagerteile und Bruchsensoren dadurch geschützt.

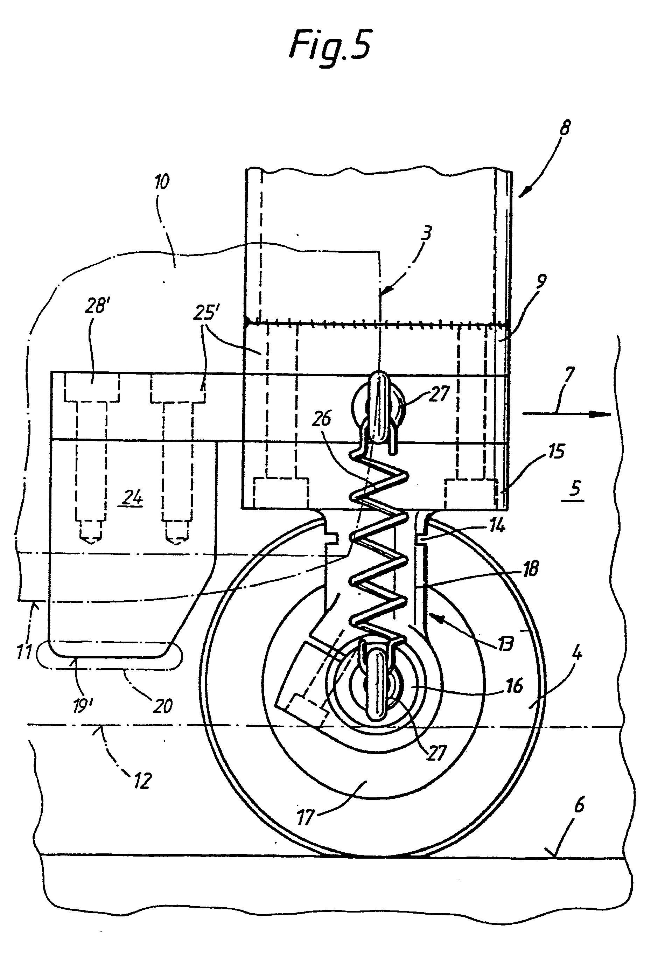

Bei der in Figur 5 dargestellten modifizierten Ausbildung der Notlauffläche 19' ist diese durch eine Gleitkufe 20 gebildet, die am Ende eines frei von der Zwischenplatte 25' bzw. des Stieles 28' abragenden Gleitklotzes 24 gebildet ist. Die Gleitkufe 20 ist nicht nur aus Platzgründen gegenüber der Umfangspartie der Querführungsrolle 4, sondern auch aus Gründen eines besseren Hinweggleitens über unebenheiten an der Seitenfläche des Querführungssteges 6 an ihrem vorauslaufenden Ende angeschrägt. Der Gleitklotz 24, der ein einheitliches Werkstück mit der Gleitkufe 20 bildet, besteht vorteilhafter Weise auf einem gehärteten und somit verschleißfesten Stahlstück, das ggf. leicht erneuert werden kann. Es ist auch denkbar, die Gleitkufe 20 in Form einer aufgelöteten schlagfesten Hartmetalleiste auszubilden.

## Patentansprüche

1. Spurführbarer Omnibus mit je einer jedem der einschlagbaren Fahrzeugräder (3) der lenkbaren Fahrzeugachse (2) bodennah zugeordneten, horizontal liegenden Querführungsrolle (4), die jeweils über einen das einschlagbare Fahrzeugrad von dessen Innenseite her in Fahrtrichtung nach vorne umgreifenden Haltearm (8) vorauslaufend in konstanter Relativlage zur Radebene derart gehalten ist, daß die zur Fahrzeugaußenseite weisende Umfangspartie der Querführungsrolle (4) in jeder Einschlagstellung der Fahrzeugräder (3) die außenliegende Seitenflanke des Radreifens seitlich überragt, ferner mit einer in der Nähe des Außenendes des die Querführungsrolle (4) oberseitig übergreifenden Haltearmes (8) angebrachten, durch einen Einschnitt oder eine Materialschwächung bewirkte Sollbruchstelle (14) im Haltearm (8), **dadurch gekennzeichnet,** daß am Haltearm (8), von einer — von der Sollbruchstelle (14) aus gesehen — näher am Fahrzeugrad (3) liegenden Stelle getragen, eine zur Radaußenseite hin frei exponierte, etwa höhengleich wie die Querführungsrolle (4) liegende Notlauffläche (19, 19') angebracht ist, die zwar gegenüber der außenliegenden Umfangspartie der Querführungsrolle (4) in Seitenrichtung zurückversetzt ist, die aber die außenliegende Seitenflanke (11) des Radreifens (10) seitlich überragt (Maß a).

2. Omnibus nach Anspruch 1, **dadurch gekennzeichnet,** daß die Notlauffläche (19, 19') in Fahrtrichtung (7) hinter der Querführungsrolle (4) am Haltearm (8) angebracht ist.

3. Omnibus nach Anspruch 1 oder 2, **dadurch gekennzeichnet,** daß die Notlauffläche (19, 19') unter Einhaltung des an der Querführungsrolle (4) vorliegenden Freiraumes (Lichtmaß F) bis zur Fahrbahnoberfläche (5) möglichst tief angeordnet ist.

4. Omnibus nach einem der Ansprüche 1 bis 3, **dadurch gekennzeichnet,** daß die Notlauffläche (19')

4

gebildet ist von einer Gleitkufe (20) aus verschleißfestem Werkstoff (Gleitklotz 24, Figur 5).

5. Omnibus nach einem der Ansprüche 1 bis 3, **dadurch gekennzeichnet,** daß die Notlauffläche (19) gebildet ist von einer kleinen Notlaufrolle (21).

6. Omnibus nach Anspruch 5, **dadurch gekennzeichnet,** daß die Notlaufrolle (21) mit einem schwingungsdämpfenden Reifen (Rundschnurringe 22) insbesondere aus Gummi, Kunststoff oder Holz versehen ist.

7. Omnibus nach einem der Ansprüche 4 bis 6, **dadurch gekennzeichnet,** daß die Gleitkufe (20) oder die Notlaufrolle (21) gehalten ist durch einen quer zur Radebene frei vom Haltearm (8) abragenden Gleitklotz (24) oder Bolzen (23).

8. Omnibus nach Anspruch 7, **dadurch gekennzeichnet,** daß der Bolzen (23) oder Gleitklotz (24) von einer Zwischenplatte (25) gehalten ist, die gemeinsam mit einem die Sollbruchstelle (14) enthaltenden Wechselteil (13) an einen Befestigungsflansch (9) des Haltearmes (8) angeflanscht ist.

9. Omnibus nach einem der Ansprüche 1 bis 8, **dadurch gekennzeichnet,** daß oberhalb des die Sollbruchstelle (14) enthaltenden Endbereiches (Wechselteil 13) des Haltearmes (8) eine die Sollbruchstelle (14) überbrückende, dies- und jenseits von ihr befestigte, vorzugsweise als Schraubenzugfeder ausgebildete, vorgespannte Aufrichtfeder (26) angebracht ist.

10. Omnibus nach Anspruch 9, **dadurch gekennzeichnet,** daß die als Schraubenzugfeder ausgebildete Aufrichtfeder (26) mit ihrem endseitig angebrachten Einhängeösen jeweils in eine Ringschraube (27) eingehängt ist, deren eine in die Zwischenplatte (25) und deren andere in die obere Stirnseite des Lagerzapfens (16) der Querführungsrolle (4) eingeschraubt ist.

## Claims

1. A track-guidable omnibus with respectively one horizontally-disposed cross-guide roller (4) associated close to the ground with each of the engageable vehicle wheels (3) of the guidable vehicle axle (2), which cross-guide roller (4) is in each instance, by means of a holder arm (8) forwardly surrounding the engageable vehicle wheel from its inner side in the travel direction, held forwardly running in a constant relative position to the wheel plane in such a manner that the surrounding part of the cross-guide roller (4) pointing towards the outside of the vehicle protrudes laterally in every engagement position of the vehicle wheels (3) over the external side flank of the wheel tyre, furthermore with a predetermined breaking point (14) in the holder arm (8), effected by a cut or a weakening of the material, provided in the vicinity of the outer end of the holder arm (8) overlapping the top of the cross-guide roller (4), characterized in that, on the holder arm (8) supported at a point close to the vehicle wheel (3) — when seen outwards from the predetermined breaking point (14) — an emergency running surface (19, 19') is provided, freely exposed towards the outside of the wheel, substantially at the same height as the cross-guide roller (4), and which is indeed set back in the lateral direction relative to the externally-lying surrounding part of the cross-guide roller (4), but which protrudes laterally over the externally-lying side flank (11) of the wheel tyre (10) (measurement a).

2. An omnibus according to claim 1, characterized in that the emergency running surface (19, 19') is provided in the direction of travel (7) behind the cross-guide roller (4) on the holder arm (8).

3. An omnibus according to either claim 1 or 2, characterized in that the emergency running surface (19, 19'), while retaining the free space (clearance F) lying forward on the cross-guide roller (4) is provided as deeply as possible towards the surface of the track (5).

4. An omnibus according to one of the claims 1 to 3, characterized in that the emergency running surface (19') is formed of an undercarriage skid (20) of wear-resistance material (slide block 24, Fig. 5).

5. An omnibus according to one of the claims 1 to 3, characterized in that the emergency running surface (19) is formed of a small emergency running roller (21).

6. An omnibus according to claim 5, characterized in that the emergency running surface (21) is provided with an ocillation-damping tyre (round cord rings 22), particularly of rubber, plastic or wood.

7. An omnibus according to one of claims 4 to 6, characterized in that the undercarriage skid (20) or the emergency running roller (21) is held by means of a slide block (24) or bolt (23) protruding transversely to the wheel plane freely from the holder arm (8).

8. An omnibus according to claim 7, characterized in that the bolt (23) or slide block (24) is held by an intermediate plate (25) which, together with an interchangeable part (13) containing the predetermined breaking point (14), is flanged to a securing flange (9) of the holder arm (8).

9. An omnibus according to one of claims 1 to 8, characterized in that above the end region (interchangeable part 13) containing the predetermine breaking point (14), a tensioned lifting spring (26), preferably constructed as a helical tension spring, secured on the near and far side of the predetermined breaking point (14) which it bridges over.

5

10. An omnibus according to claim 9, characterized in that the lifting spring (26) constructed as a helical tension spring is suspended by its hanging lug provided on its end in each instance from a ring bolt (27) of which one is screwed into the intermediate plate (25) and the other into the upper front side of the bearing pin (16) of the cross-guide roller (4).

## Revendications

1. Autobus pouvant être guidé sur voie, comportant respectivement un galet de guidage transversal (4), disposé horizontalement à proximité du sol et associé à chacune des roues directrices (3) de l'essieu directeur (2) du véhicule, ce galet étant respectivement maintenu en avant et dans une position relative constante par rapport au plan de roue par l'intermédiaire d'un bras de retenue (8) entourant, vers l'avant dans le sens de marche, la roue directrice à partir de son côté intérieur de telle sorte que la partie de pourtour, dirigée vers l'extérieur du véhicule, du galet de guidage transversal (4) déborde latéralement dans chaque position de braquage des roues (3) du véhicule, du flanc latéral extérieur du pneumatique, ledit bras comportant en outre une zone (14) de rupture de consigne, produite par une encoche ou un affaiblissement de matière et située au voisinage de l'extrémité extérieure du bras de retenue (8) s'accrochant par le haut sur le galet de guidage transversal (4), autobus caractérisé en ce qu'il est prévu sur le bras de retenue (8), dans une zone rapprochée de la roue de véhicule (3) — en la considérant à partir de la zone de rupture de consigne (14) — une surface pour marche d'urgence (19, 19'), librement dégagée vers l'extérieur de la roue, située à peu près à la même hauteur que le galet de guidage transversal (4) et qui est évidemment décalée latéralement par rapport à la partie circonférentielle extérieure du galet de guidage transversal (4) mais qui déborde cependant latéralement (dimension a) du flanc latéral extérieur (11) du pneumatique (10).

2. Autobus selon la revendication 1, caractérisé en ce que la surface pour marche d'urgence (19, 19') est disposée sur le bras de retenue (8) en arrière du galet de guidage transversal (4) en considérant le sens de marche (7).

3. Autobus selon la revendication 1 ou 2, caractérisé en ce que la surface pour marche d'urgence (19, 19') est disposée le plus bas possible tout en maintenant l'espace libre (distance d'espacement F) prévu pour le galet de guidage transversal (4) jusqu'à la surface (5) de la voie.

4. Autobus selon l'une des revendications 1 à 3, caractérisé en ce que la surface pour marche d'urgence (19') est constituée par un patin de glissement (20) constitué d'un matériau résistant à l'usure (sabot de glissement 24, figure 5).

5. Autobus selon l'une des revendications 1 à 3, caractérisé en ce que la surface pour marche d'urgence (19) est créée par un petit galet pour marche d'urgence (21).

6. Autobus selon la revendication 5, caractérisé en ce que le galet pour marche d'urgence (21) est pourvu d'un bandage (anneau circulaire 22) amortissant les oscillations et notamment constitué de caoutchouc, de matière plastique ou de bois.

7. Autobus selon l'une des revendications 4 à 6, caractérisé en ce que le patin de glissement (20) ou le galet pour marche d'urgence (21) est maintenu par un sabot de glissement (24) ou une broche (23), faisant saillie librement du bras de retenue (8) perpendiculairement au plan de roue.

8. Autobus selon la revendication 7, caractérisé en ce que la broche (23), ou le sabot de glissement (24), est maintenu par une plaque intermédiaire (25), qui est fixée, en même temps qu'une partie remplaçable (13) comportant la zone de rupture de consigne (14), sur une bride de fixation (9) du bras de retenue (8).

9. Autobus selon l'une des revendications 1 à 8, caractérisé en ce qu'il est prévu, au-dessus de la partie d'extrémité (partie remplaçable 13) du bras de retenue (8) comportant la zone de rupture de consigne (14), un ressort d'alignement précontraint (26) agencé de préférence sous la forme d'un ressort hélicoïdal de traction, chevauchant la zone de rupture de consigne (14), de chaque côté de cette zone.

10. Autobus selon la revendication 9, caractérisé en ce que le ressort d'alignement (26), agencé comme un ressort hélicoïdal de traction, est maintenu par les crochets prévus à ses extrémités respectivement dans des vis à oreilles (27), dont l'une est vissée dans la plaque intermédiaire (25) et dont l'autre est vissée dans le côté frontal supérieur du tourillon de palier (16) du galet de guidage transversal (4).

6

# Fig.1

# Fig. 2

# Fig. 3

# Fig. 4

# Fig.5